# EUROPEAN PATENT SPECIFICATION

(11) **EP 0 695 729 B1**
(45) Date of publication and mention of the grant of the patent: **07.04.1999**
(21) Application number: 95305161.2
(22) Date of filing: 24.07.1995
(51) Int. Cl.: C04B 35/56

(54) **Preparation of high density zirconium carbide ceramics with preceramic polymer binders**
Herstellung von Zirkoncarbidkeramik hoher Dichte mit vorkeramischen Polymerbindern
Fabrication de céramiques d'une densité élevée en carbure de zirconium avec liants précéramiques polymères

(30) Priority: 01.08.1994 US 283419
(43) Date of publication of application: 07.02.1996
(73) Proprietor: DOW CORNING CORPORATION, Midland, Michigan 48686-0994 (US)
(72) Inventor: Zank, Gregg Alan, Midland, Michigan (US)
(74) Representative: Vandamme, Luc Johan Roger

(56) References cited:
- EP-A- 0 030 145
- GB-A- 2 002 738
- US-A- 4 482 669

## Description

This invention relates to the preparation of high density zirconium carbide ceramic bodies by the pyrolysis of mixtures comprising zirconium carbide powder and preceramic organosilicon polymers.

Zirconium carbide ceramic bodies are known in the art. They have particular utility as wear parts in the nuclear industry because of their high hardness, resistance to wear and nuclear properties. Early methods for producing these bodies involved hot-pressing zirconium carbide powder at temperatures up to 2300°C. This method, however, has a number of disadvantages. First, the method does not produce green bodies and, as such, does not allow for green machining. Second, the process is expensive because it requires the use of high pressure during sintering. Finally, it is difficult to form bodies of complex size and shape by hot pressing methods.

An alternative approach to producing zirconium carbide bodies is to use fugitive binders to form green zirconium carbide bodies and to then pressureless sinter these green bodies. In this approach, however, the binder must be pyrolyzed out of the bodies. The resultant process takes additional time and the ceramic bodies also undergo significant shrinkage which may result in warpage or cracks.

U.S. Patent 4,482,669 discloses a polysilazane preceramic polymer suitable for making various ceramic products of Si₃N₄ or SiC which is prepared by reacting an organodihalosilane with ammonia followed by treatment of the product with a basic catalyst. EP-A 0 030 145 discloses a process for preparing a sintered ceramic body of substantially SiC which comprises heating a semi-inorganic block copolymer in a vacuum or an environment selected from inert gases, reducing gases, or hydrocarbon gases, at a temperature of 500 to 2300°C.

U.S. Patent 4,289,720 teaches a process for the formation of ceramic fired bodies. The process comprises molding mixtures of organosilicon polymers and ceramic powders to form green bodies followed by pyrolyzing the green bodies to form ceramic bodies. However, over 150 ceramic powders (including zirconium carbide) are listed therein, whereas the examples only show densification of silicon carbide, silicon nitride and boron carbide. Moreover, it only teaches temperatures up to 2000°C., with temperatures in the range of 1550-1800°C. being preferred (col. 9, lines 1-4). We have found that such temperatures are not sufficient to complete the polymer pyrolysis. As such, the density of the bodies from the patent is less than those of the present application.

The object of our invention is to provide a method for producing high density, high strength zirconium carbide ceramic bodies. We have unexpectedly found that such ceramics are obtained by sintering a composition comprising a preceramic organosilicon polymer and zirconium carbide powder.

The present invention provides a composition which comprises in uniform admixture from 1 to 50 weight percent of a preceramic organosilicon polymer, and from 50 to 99 weight percent of a zirconium carbide powder of less than 10 micrometers average particle size, wherein said preceramic organosilicon polymer is selected from the group consisting of polysiloxanes, polysilazanes, polysilanes, and polycarbosilanes, and is capable of being converted at elevated temperature under an inert atmosphere to a ceramic char with a yield in excess of 20 weight percent as determined by pyrolysis of said preceramic organosilicon polymer under an inert atmosphere.

The present invention also provides a method for preparing a handleable green body which comprises preparing the composition of the present invention and forming it into a desired shape under pressure at a temperature between 50 and 500°C to obtain the handleable green body having a green strength of at least 20 kgf/cm².

The present invention further provides a method for the preparation of high density sintered zirconium carbide ceramic bodies having a density of greater than 4.8g/cm³ and a strength greater than 5kgf/mm² which method comprises
(a) forming a handleable green body according to the present invention and
(b) sintering said body in an inert atmosphere at a temperature greater than 2000°C to obtain the sintered body from preceramic organosilicon polymers and zirconium carbide ceramic powder. Such highly densified bodies are useful, for example, in wear parts and the nuclear industry.

Herein, "strengths" are determined by 4 point modulus of rupture tests, but may of course be determined by other means known to the person skilled in the art.

As used herein, the theoretical density of zirconium carbide is 6.73 g/cm³. As discussed infra, however, the ceramic bodies of this invention generally contain some SiC and carbon in the intergranular pores. The theoretical amount of SiC in a ceramic body is taken into consideration when calculating theoretical densities.

The first step of the method of our invention comprises blending the organosilicon polymer with zirconium carbide powder. The organosilicon polymers useful in this invention are generally well known in the art. Organosilicon polymers with a significant ceramic char yield are used because the amount of binder shrinkage that occurs upon pyrolysis decreases as the char yield increases, specifically the ceramic char yield is greater than 20 weight percent. More preferably, organosilicon polymers with ceramic char yields greater than 35 weight percent are employed. Most preferably, organosilicon polymers with ceramic char yields greater than 45 weight percent are employed.

The organosilicon polymer must also yield a ceramic char containing at least enough carbon to form silicon carbide with the silicon present in the char (hereafter a "stoichiometric amount"). Excess carbon in the char is often preferred because it assists in removing oxygen and in the densification of the ceramic body. This excess carbon is referred to as "free carbon" (i.e., excess carbon present in the char over the amount of carbon needed to form silicon carbide with the silicon present in the char). It is often preferred that the ceramic char contain at least 10 weight percent free carbon. It is often more preferred that the ceramic char contain at least 25 weight percent free carbon.

Organosilicon polymers used in this invention are selected from polysiloxanes, polysilazanes, polysilanes and polycarbosilanes. If the organosilicon polymer is an organopolysiloxane, it may contain units of general structure [R₃SiO_{0.5}], [R₂SiO], [RSiO_{1.5}] and [SiO₂] where each R is independently selected from the group consisting of hydrogen atom, alkyl radicals containing 1 to 20 carbon atoms such as methyl, ethyl or propyl; aryl radicals such as phenyl and unsaturated hydrocarbon radicals such as vinyl. Examples of specific organopolysiloxane groups include [PhSiO_{1.5}], [MeSiO_{1.5}], [MePhSiO], [Ph₂SiO], [PhViSiO] [ViSiO_{1.5}], [MeHSiO], [MeViSiO], [Me₂SiO] and [Me₃SiO_{0.5}]. As used herein, Ph represents phenyl, Me represents methyl and Vi represents vinyl. Mixtures of organopolysiloxanes may also be employed.

The organopolysiloxanes of this invention are prepared by techniques well known in the art. The actual method used to prepare the organopolysiloxane is not critical. Most commonly, the organopolysiloxanes are prepared by the hydrolysis of organochlorosilanes. Such methods, as well as others, are described in Noll, Chemistry and Technology of Silicones, Chapter 5 (translated 2d Ger. Ed., Academic Press, 1968).

The organopolysiloxane may also be substituted with various metallo groups (i.e., containing repeating metal-O-Si units). Examples of suitable compounds include borosiloxanes and alumosiloxanes which are both well known in the art. For instance, Noll, Chemistry and Technology of Silicones, Chapter 7, (translated 2d Ger. Ed., Academic Press, 1968) discloses numerous polymers of this type as well as their method of manufacture. Additionally, JP-A 54-134744; U.S. Patent 4,455,414 and U.S. Patent 5,112,779 also describe the preparation and utility of various polymetallosiloxanes as binders for SiC powder which have use in our invention.

If the preceramic organosilicon polymer is a polysilazane, it may contain units of the type [R₂SiNH], [RSi(NH)_{1.5}] and/or 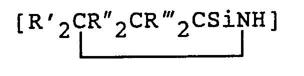 where each R is independently selected from the group consisting of hydrogen atom; alkyl radicals containing 1 to 20 carbon atoms such as methyl, ethyl and propyl; aryl radicals such as phenyl and unsaturated hydrocarbon radicals such as vinyl and each R', R'', and R''' is independently selected from the group consisting of hydrogen atom; alkyl radicals having 1 to 4 carbon atoms; aryl radicals such as phenyl and unsaturated hydrocarbon radicals such as vinyl. Examples of specific polysilazane units include [Ph₂SiNH], [PhSi(NH)_{1.5}], 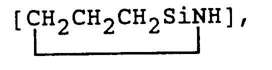 [MeSi(NH)_{1.5}], [Me₂SiNH], [ViSi(NH)_{1.5}], [Vi₂SiNH], [PhMeSiNH], [HSi(NH)_{1.5}], [PhViSiNH] and [MeViSiNH].

The polysilazanes of this invention can be prepared by techniques well known in the art. The actual method used to prepare the polysilazane is not critical. Suitable preceramic silazane polymers or polysilazanes may be prepared by the methods of U.S. Patents 4,312,970; 4,340,619; 4,395,460 and 4,404,153. Suitable polysilazanes also include those prepared by the methods of U.S. Patents 4,482,689 and 4,397,828. Other polysilazanes suitable for use in this invention can be prepared by U.S. Patents 4,540,803 and 4,543,344 or by Burns et al. in J. Mater. Sci, 22 (1987), pp 2609-2614; and U.S. Patents 4,835,238; 4,774,312; 4,929,742 and 4,916,200.

The polysilazane may also be substituted with various metal groups (i.e., containing repeating metal-N-Si units). Examples of suitable compounds include borosilazanes which are known in the art. These include those described in U.S. Patents 4,910,173; 4,482,689; 5,164,344; 5,252,684; 5,169,908 and 5,030,744. It also includes borosilazanes described by Seyferth et al., J. Am. Ceram. Soc. 73, 2131-2133 (1990); Noth, B. Anorg. Chem. Org. Chem., 16(9), 618-21, (1961); and EP-A 0,364,323.

If the preceramic organosilicon polymer is a polysilane, it may contain units of general structure [R₃Si], [R₂Si] and [RSi] where each R is independently selected from the group consisting of hydrogen atom; alkyl radicals containing 1 to 20 carbon atoms such as methyl, ethyl and propyl; aryl radicals such as phenyl and unsaturated hydrocarbon radicals such as vinyl. Examples of specific polysilane units are [Me₂Si], [PhMeSi], [MeSi], [PhSi], [ViSi], [PhMeSi], [MeHSi], [MeViSi], [Ph₂Si], [Me₂Si] and [Me₃Si].

The polysilanes of this invention can be prepared by techniques well known in the art. The actual method used to prepare the polysilanes is not critical. Suitable polysilanes may be prepared by the reaction of organohalosilanes with alkali metals as described in Noll, Chemistry and Technology of Silicones, 347-49 (translated 2d Ger. Ed., Academic Press, 1968). More specifically, suitable polysilanes may be prepared by the sodium metal reduction of organo-substituted chlorosilanes as described in U.S. Patent 4,260,780 and in 25 Polym. Preprints 4 (1984). Other suitable polysilanes can be prepared by the general procedures described in U.S. Patent 4,298,559.

The polysilane may also be substituted with various metal groups (i.e., containing repeating metal-Si units). Examples of suitable metals to be included therein include boron, aluminum, chromium and titanium. The method used to prepare said polymetallosilanes is not critical. It may be, for example, the method of U.S. Patents 4,762,895 or 4,906,710.

If the preceramic organosilicon polymer is a polycarbosilane, it may contain units of the type [R₂SiC], [RSiC_{1.5}] and/or [R₃SiC] where each R is independently selected from the group consisting of hydrogen atom; alkyl radicals containing 1 to 20 carbon atoms such as methyl, ethyl and propyl; aryl radicals such as phenyl and unsaturated hydrocarbon radicals such as vinyl. Suitable polymers are described, for instance, in U.S. Patents 4,052,430 and 4,100,233. Polycarbosilanes containing repeating (-SiHCH₃-CH₂-) units can be purchased commercially from the Nippon Carbon Co.

The polycarbosilane may also be substituted with various metal groups such as boron, aluminum, chromium and titanium. The method used to prepare such polymers is not critical. It may be, for example, the methods of U.S. Patents 4,248,814; 4,283,376 and 4,220,600.

The above organosilicon polymers which contain vinyl groups may be preferred since vinyl groups attached to silicon provide a mechanism whereby the organosilicon polymer can be cured prior to sintering. Also, mixtures of any of the above organosilicon compounds are also contemplated by this invention.

Specific methods for preparation of suitable organosilicon polymers are illustrated in the following examples.

The use of organosilicon polymers as binders for zirconium carbide powder is particularly advantageous over binders of the prior art since a polymer can be chosen which will provide a suitable char yield and, if desired, additional free carbon. In this manner, the polymer can be tailored to obtain a polymer/zirconium carbide ratio in the preceramic mixture which is suitable for any molding application to be utilized.

The preceramic organosilicon polymer is present in the compositions of the present invention in the range of 1 to 50 wt%. Preferably, the polymer is present in the range of 5 to 30 wt% and most preferably in the range of 5 to 25 wt%. The exact amount of polymer, however, is dependent on the method of molding used. For instance, for standard cold isostatic pressing the preferred amount of polymer is in the range of 5-20 wt%. For extrusion, the preferred amount of polymer is in the range of 15-25 wt%.

The compositions of the invention also include zirconium carbide powders. These powders are commercially available and are well known in the art, for instance, from Starck™. Zirconium carbide powders with a number average particle size of less than 10 µm are used; powders with a number average particle size of less than 5 µm are preferred; and those with a number average particle size less than 1 µm are more preferred.

The compositions of this invention may also contain curing agents which are used to cause the organosilicon polymer to crosslink prior to sintering. The green bodies produced thereby generally have higher strengths than the uncured articles. Thus, they can better withstand any handling or machining processes prior to sintering. These curing agents are generally activated by heating the green body containing the curing agent to temperatures in the range of 50-500°C.

Conventional curing agents which are useful in the present invention are well known in the art. Examples include organic peroxides such as dibenzoyl peroxide, bis-p-chlorobenzol peroxide, bis-2,4-dichlorobenzol peroxide, di-t-butyl peroxide, dicumyl peroxide, t-butyl perbenzoate, 2,5-bis(t-butylperoxy)-2,3-dimethylhexane and t-butyl peracetate; and platinum-containing curing agents such as platinum metal, H₂PtCl₆, and ((C₄H₉)₃P)₂PtCl₂. Other conventional curing agents known in the art may also be used. The curing agent is present in an effective amount, i.e. an amount sufficient to induce crosslinking in the polymer. Therefore, the actual amount of the curing agent will depend on the activity of the actual agent used and the amount of polymer present. Normally, however, the peroxide curing agent will be present at 0.1 to 5.0 weight percent based on the weight of the compound to be cured with the preferred amount being 2.0 weight percent. When platinum-containing curing agents are used, the amount will normally be such that platinum is present at 1 to 1000 ppm based on the weight of the compound to be cured with the preferred amount being 50 to 150 ppm platinum.

In addition to the above curing agent, a crosslinking agent may also be included in the mixture to crosslink the polymer and, thereby, to modify the cure characteristics. These agents can include, for example, polyfunctional silanes or siloxanes. The preferred crosslinking agents are siloxanes with Si-H functional bonds such as Ph₂Si(OSiMe₂H)₂ or PhSi(OSiMe₂H)₃.

The addition of other processing aids such as lubricants, deflocculants and dispersants is also permissible in this invention. Examples of such compounds include stearic acid, mineral oil, paraffin, calcium stearate, aluminum stearate, succinic acid, succinimide, succinic anhydride or various commercial products such as Oloa 1200™.

Once the amounts of the various components have been determined, they are combined in a manner which assures a uniform and intimate mixture so that areas of varying density throughout the sintered product are avoided. Uniform and intimate mixtures can be prepared by using conventional blending techniques such as grinding the various powders in either the dry or wet state, or the use of ultrasonic dispersion. Other mixing and grinding methods will be apparent to those skilled in the art.

The above mixture is then formed into a handleable green body having sufficient green strength to be handled or machined to a desired shape prior to sintering, namely a green strength of 2.0 Mpa (20 kg/cm²) or more. This green strength is achieved primarily because the preceramic mixture includes an organosilicon polymer which acts as a matrix for the zirconium carbide powder. The increased green strength obtained by the practice of this invention alleviates the problems associated with handling fragile objects and allows for the production of more complex shapes through machining or milling.

The handleable green bodies may be formed by conventional techniques known in the art. Such methods include hot pressing, dry pressing, slip casting, pressure molding, uniaxial pressing, isopressing, extrusion, transfer molding and injection molding. The present invention is particularly advantageous in this respect since the amount of polymer in the preceramic mixture can easily be changed to accommodate the use of multiple molding techniques without affecting the quality of the sintered product.

The composition is preferably cured prior to its final shaping. Curing procedures are well known in the art. Generally, such curing can be carried out by heating the article to a temperature in the range of 50 to 500°C., preferably in an inert atmosphere such as argon or nitrogen.

The shaped green bodies are then fired to an elevated temperature under an inert atmosphere to convert them into ceramic articles having densities of 4.8 g/cm³ or greater. Upon pyrolysis, the organosilicon polymers of this invention yield SiC and, optionally, free carbon. This factor tends to decrease the amount of shrinkage that occurs when the mixture is sintered since the SiC forms in the intergranular pores of the zirconium carbide powder, thus limiting the shrinkage due to densification. Because less shrinkage occurs, sintered objects with increased tolerance control are surprisingly formed.

The compositions of this invention may be sintered either under pressure or by using a pressureless process to produce a highly densified ceramic article. Since the sintering process employing pressure will generally produce ceramic articles with higher density, such a method would be preferred if maximum density were desired. Generally, however, the pressureless sintering process is preferred because of the simplified operations involved.

Inert atmospheres are used for sintering to prevent oxygen incorporation and silica formation. The sintering process as well as the density of the sintered product are thereby enhanced. For this invention, an "inert atmosphere" includes an inert gas, vacuum or both. If an inert gas is used, it may be argon, helium or nitrogen. If a vacuum is used, it may be in the range of 13.3 - 26,664 Pa (0.1-200 torr), preferably 13.3 - 40 Pa (0.1-0.3 torr). Exemplary of a combined process might be firing the composition in argon up to 1200°C., firing from 1200 to 1500°C. in a vacuum and firing from 1500 to 2150°C. under argon.

Sintering may be performed in any conventional high temperature furnace equipped with a means to control the furnace atmosphere. Temperatures of greater than 2000°C. are generally used with the preferred range being 2100-2250°C. The most preferred sintering temperature is about 2150°C. Though lower temperatures can be used, the ceramic product may not possess the desired density.

The temperature schedule for sintering depends on both the volume of parts to be fired and the composition of the mixture. For smaller objects, the temperature may be elevated rapidly. For larger objects, or those with large concentrations of the organosilicon polymer, however, more extended programs are needed to create uniform ceramic bodies.

The resultant ceramic articles have densities of, or greater than, 4.8 g/cm³. It is preferred that the density of the ceramic article be greater than 5.1 g/cm³ and more preferred that the density be greater than 5.4 g/cm³. Our ceramic bodies have strengths greater than 49.0 MPa (5 kg/mm²). Such bodies comprise a mixture of mainly zirconium carbide with small amounts of silicon carbide and carbon being present (e.g., less than 10% of the total ceramic weight), i.e., said bodies contain 2-10 wt% (e.g., 2-8 wt%) silicon carbide, 0.1 - 2 wt% free carbon and 88-98 wt% zirconium carbide. The expression "zirconium carbide body" is used herein to describe these ceramic bodies.

So that those skilled in the art can better appreciate and understand the invention, the following examples are presented. Unless otherwise indicated, all percentages are by weight.

In the following examples, the analytical methods used were as follows:

Proton NMR spectra were recorded on either a Varian™ EM360 or FT 200 spectrometer and the results presented herein are in ppm. Fournier transform IR spectra were recorded on a Perkin Elmer™ 7700 FT spectrometer. Gel permeation chromatography (GPC) data were obtained on a Waters™ GPC equipped with a model 600E systems controller, a model 490 UV and model 410 Differential Defractometer detectors; all values are relative to polystyrene. TGA and TMA data were recorded on a Du Pont™ 940 thermomechanical analyzer (TMA) and an Omnitherm™ thermal gravimetric analyzer (TGA) interfaced to an IBM™ 386 Computer.

Carbon, hydrogen and nitrogen analysis were done on a Control Equipment Corporation™ 240-XA Elemental Analyzer. Oxygen analysis was done on a Leco™ Oxygen Analyzer equipped with an Oxygen Determinator 316 (Model 783700) and an Electrode Furnace EF100. Silicon was determined by a fusion technique which consisted of converting the material to soluble forms of silicon and analyzing the solute for total silicon by atomic absorption spectrometry.

Fired densities were measured by water immersion techniques according to ASTM C373-72.

### Example 1

Pressureless sintering of zirconium carbide powder using siloxane binder.

### A. Polymer Synthesis

A mixture of 3960 g of PhSi(OMe)₃ and 620 g (ViMe₂Si)₂O was added to a solution of 3 g of trifluoromethane sulfonic acid in 800 g of water. After approximately 20 minutes, the solution was refluxed for 5 hours. The solution was cooled and then neutralized with 2.73 g of potassium carbonate. The volatiles were removed by distillation until an internal temperature of 120°C. was reached. The reaction mixture was cooled and 1500 g of toluene and 125.7 g of a 3 wt% solution of KOH in water were added. The solution was refluxed and the water removed in a Dean-Stark trap. After water removal, the mixture was cooled and 20 mL of Me₂ViSiCl were added. After stirring at room temperature for 2 hours, the mixture was filtered through a 0.2 µm membrane filter and the filtrate concentrated by rotary evaporation. The residue was dried for 1-2 hours at 100°C. and less than 133.3 Pa (1 torr). The yield was 3053.3 g.

### B. Polymer Pyrolysis and Char Composition Calculations.

A blend of 14.85 g of the resin formed in part A, 5.15 g of Ph₂Si(OSiMe₂H)₂ and 0.01 g Lupersol™ (bis (t-butyl peroxy-2,5-dimethylhexane) was prepared. An aliquot of the blend was crosslinked at 120°C. for one hour. An aliquot of the crosslinked polymer was weighed into a graphite crucible. The crucible was transferred into an Astro tube furnace. The furnace was evacuated to less than 2.67 kPa (20 torr) and then backfilled with argon. This procedure was repeated twice. Under a purge of argon, the sample was heated to 1800°C. at 10°C./minute and held at temperature for 1 hour before cooling to room temperature. The sample had a mass retention of 44.9%. The elemental composition of the char was 53.4% carbon. The following calculation was made: 100 g of cured polymer gives 44.9 g of a ceramic char consisting of 20.9 g silicon (46.6 wt% by difference) and 24 g carbon (53.4 wt%). The char consists of 29.9 g of SiC (66.6%) and 15 g C (33.4%). Therefore, every g of polymer gives 0.299 g of SiC and 0.15 g of excess C.

### C. Test Bar Fabrication and Firing

A mixture was prepared by mixing 7.5 g of the resin in section A dissolved in 200 mL toluene, 0.2 g Lupersol™, and 92.5 g of Starck™ zirconium carbide powder. The mixture was ultrasonicated for 5 minutes and transferred to a round bottom flask. The solvent was removed in vacuo and the residue further dried. The dried powder was ground in a mortar and pestle and then sieved through a 90 µm mesh sieve. The powder was dry pressed into test bars 35 x 8 x 2 mm in a WC lined die with a Carver™ laboratory press at 3220 kg/cm². The test bars were heated to 250°C. for 24 hours to crosslink the polymer. The test bars were fired to 1900, 2100, 2150 or 2250°C. in argon using the following program: room temperature to 1200°C. at 5°C./minute, a 30 minute hold, 1200-1400°C. at 5°C./minute under vacuum and 1400°C. to final temp at 5°C./minute with a 60 minute hold at temperature. The test bars are characterized in Table 1.

### Example 2

Pressureless sintering of zirconium carbide powder using a siloxane binder.

### A. Polymer Synthesis

A mixture of 476 g of PhSi(OMe)₃, 286 g of MeSi(OMe)₃ and 137.5 g (ViMe₂Si)₂O was added to a solution of 4 g of trifluoromethane sulfonic acid in 400 g of water. After approximately 20 minutes, the solution was refluxed for 12 hours. The solution was cooled and then neutralized with 3.5 g of potassium carbonate. The volatiles were removed by distillation until an internal temperature of 110°C. was reached. The reaction mixture was cooled and 700 g of toluene and 70 g of a 3 wt% solution of KOH in water were added. The solution was refluxed and the water removed in a Dean-Stark trap. After all of the water was removed, the mixture was cooled and 27 mL of Me₂ViSiCl added. After stirring at room temperature for 2 hours, the mixture was filtered through a 0.2 µm membrane filter and the filtrate concentrated by rotary evaporation. The residue was dried for about 1-2 hours at 100°C. and less than 133.3 Pa (1 torr). The yield was 553.3 g.

### B. Polymer Pyrolysis and Char Composition Calculations.

A blend of 6.554 g of the resin formed in part A and 0.06 g Lupersol™ was prepared. An aliquot of the blend was crosslinked at 180°C. for one hour. An aliquot of the crosslinked polymer was weighed into a graphite crucible. The crucible was transferred into an Astro tube furnace. The furnace was evacuated to less than 2.67 kPa (20 torr) and then backfilled with argon. This procedure was repeated twice. Under a purge of argon, the sample was heated to 1800°C. at 10°C./minute and held at temperature for 1 hour before cooling to room temperature. The sample had a mass retention of 41.8%. The elemental composition of the char was 38.1% carbon and 61.9% silicon (by difference). The following calculation was made: 100 g of cured polymer gives 41.8 g of a ceramic char consisting of 25.9 g silicon and 15.9 g carbon. The char consists of 36.97 g of SiC (88.43%) and 4.83 g C (11.57%). Therefore, every g of polymer gives 0.369 g of SiC and 0.048 g of excess C.

### C. Test Bar Fabrication and Firing.

A mix was prepared using the following procedure: 7.5 g of the resin prepared in part A, 200 mL of toluene, and 0.20 g Lupersol™ was mixed with 92.5 g of Starck™ zirconium carbide powder in a beaker. The mixture was ultrasonicated, dried, ground, sieved, pressed, cured and fired as in Example 1 (except for not firing at 1900°C). The test bars are characterized in Table 1.

### Example 3

Pressureless sintering of zirconium carbide powder using polysilane binder.

### A. Polymer pyrolysis and Char Composition Calculations.

An aliquot of commercially available PSS-400 obtained from Shinn Nisso Kaka Co., Ltd. was weighed into a graphite crucible. The crucible was transferred into an Astro tube furnace. The furnace was evacuated to less than 2.67 kPa (20 torr) and then backfilled with argon. This procedure was repeated twice. Under a purge of argon, the sample was heated to 1800°C. at 10°C./minute and held at temperature for 1 hour before cooling to room temperature. The sample had a mass retention of 44.2%. The elemental composition of the char was 42.3% carbon and 57.7% silicon. The following calculation was made: 100 g of cured polymer gives 44.2 g of a ceramic char consisting of 25.5 g silicon and 18.7 g carbon. The char consists of 34.6 g of SiC (78.3%) and 9.58 g C (21.7%). Therefore, every g of polymer gives 0.346 g of SiC and 0.095 g of excess C.

### B. Test Bar Fabrication and Firing.

A mixture was prepared by mixing 7.5 g of the resin in section A, 200 mL of toluene and 92.5 g of Starck™ zirconium carbide powder. The mixture was ultrasonicated, dried, ground, sieved, pressed, crosslinked and fired as in Example 1. The test bars are characterized in Table 1.

### Example 4

Pressureless sintering of zirconium carbide powder using polycarbosilane binder.

### A. Polymer pyrolysis and Char Composition Calculations.

An aliquot of commercially available polycarbosilane obtained from Nippon Carbon Co., Ltd. was weighed into a graphite crucible. The crucible was transferred into an Astro tube furnace. The furnace was evacuated to less than 2.67 kPa (20 torr) and then backfilled with argon. This procedure was repeated twice. Under a purge of argon, the sample was heated to 1800°C. at 10°C./minute and held at temperature for 1 hour before cooling to room temperature. The sample had a mass retention of 55.8%. The elemental composition of the char was 36.7% carbon and 63.3% silicon. The following calculation was made: 100 g of cured polymer gives 55.8 g of a ceramic char consisting of 63.3 wt% silicon and 37.2 wt% carbon. The char consists of 49.9 g of SiC (84%) and 9.5 g C (16%). Therefore, every g of polymer gives 0.499 g of SiC and 0.090 g of excess C.

### B. Test Bar Fabrication and Firing.

A mixture was prepared by mixing 7.5 g of the resin in section A, 200 mL of toluene and 92.5 g of Starck™ zirconium carbide powder. The mixture was ultrasonicated, dried, ground, sieved, pressed, crosslinked and fired as in Example 1. The test bars are characterized in Table 1.

| Ex No | Binder (wt %) | %SiC/%C in Body | Cured Density (g/cm³) | Firing Cond. (°C) | Ceramic Density (g/cm³) | 4 pt MOR Mpa (kgf/mm²) |
|---|---|---|---|---|---|---|
| 1 | 7.5 | 2.67/0.78 | 4.68 | 2100 | 5.26 | 91.1±16.66(9.3±1.7) |
| | | | | 2150 | 5.16 | 89.2 (9.1) |
| | | | | 2250 | 5.25 | 117.6 (12.0) |
| 2 | 7.5 | 3.16/0.16 | 4.87 | 2100 | 5.47 | 108.8 (11.1) |
| | | | | 2150 | 5.46 | 100.0 (10.2) |
| | | | | 2250 | 5.30 | 72.5 (7.4) |
| 3 | 7.5 | 2.85/0.61 | - | 2100 | 4.97 | 63.7±3.9 (6.5±0.4) |
| | | | | 2150 | 4.86 | 100.0 (10.2) |
| | | | | 2250 | 4.93 | 63.7±10.8 (6.5±1.1) |
| 4 | 7.5 | 3.88/0.45 | - | 2100 | 4.87 | 63.7±10.8 (6.5±1.1) |
| | | | | 2150 | 5.33 | 67.6 (6.9) |
| | | | | 2250 | 4.80 | 72.5±11.8 (7.4±1.2) |

## Claims

1. A method of forming a handleable green body having a green strength of at least 2.0 MPa (20kg/cm²) which method comprises
(a) preparing a composition which comprises in uniform admixture from 1 to 50 weight percent of a preceramic organosilicon polymer, and from 50 to 99 weight percent of a zirconium carbide powder of less than 10 micrometers average particle size, wherein said preceramic organosilicon polymer is selected from the group consisting of polysiloxanes, polysilazanes, polysilanes, and polycarbosilanes, and is capable of being converted at elevated temperature under an inert atmosphere to a ceramic char with a yield in excess of 20 weight percent as determined by pyrolysis of said preceramic organosilicon polymer under an inert atmosphere, and
(b) forming the composition into a desired shape under pressure and curing at a temperature between 50 and 500°C to obtain a handleable green body.

2. A method of preparing a sintered ceramic body of zirconium carbide having a density of 4.8g/cm³ or greater and a strength greater than 49.0 MPa (5kgf/mm²) which method comprises
(a) forming a handleable green body according to Claim 1 and
(b) sintering said body in an inert atmosphere at a temperature greater than 2000°C to obtain the sintered body.

3. A method according to Claim 1 wherein at least one agent selected from the group consisting of curing agents and crosslinking agents is additionally present in the uniform mixture in an amount effective to crosslink the preceramic organosilicon polymer.

4. A method according to Claim 2 wherein the preceramic organosilicon polymer produces a char containing at least about 10 wt% free carbon.

5. A method according to Claim 2 wherein the handleable green body is sintered at a temperature between 2100 and 2250°C.

6. A method according to Claim 1 wherein the preceramic organosilicon polymer is a polysiloxane comprising units selected from the group consisting of (MeSiO_{1.5}), (MePhSiO), (PhSiO_{1.5}), (Ph2SiO), (ViMe₂SiO) and (PhViSiO).

7. A method according to Claim 1 wherein the preceramic organosilicon polymer is a polysilazane comprising units selected from the group consisting of (Ph₂SiNH), (PhSi(NH)_{1.5}), (CH₂CH₂CH₂SiNH) and combinations thereof.

8. A method according to Claim 1 wherein the zirconium carbide powder has a number average particle size of less than 5 micrometers.

9. A method according to Claim 2 wherein a processing aid selected from the group consisting of lubricants, deflocculants and dispersants is also present in the mixture.

10. A sintered zirconium carbide body which is obtainable by the method of Claim 2 having a density of 4.8g/cm³ or greater and a strength greater than 49.0 MPa (5kgf/mm²) and which comprises 2-10 wt% of silicon carbide, 0.1-2 wt% of free carbon and 88 to 98 wt% zirconium carbide.

## Patentansprüche

1. Verfahren zur Herstellung eines handhabbaren Grünkörpers mit einer Grünfestigkeit von mindestens 2,0 MPa (20 kg/cm²), wobei das Verfahren umfaßt:
(a) Herstellen einer Mischung, die in einheitlicher Mischung 1 bis 50 Gew.-% eines vorkeramischen Organosiliciumpolymers und 50 bis 99 Gew.-% eines Zirkoniumcarbidpulvers mit einer durchschnittlichen Teilchengröße von weniger als 10 µm enthält, wobei das vorkeramische Organosiliciumpolymer ausgewählt ist aus der Gruppe bestehend aus Polysiloxanen, Polysilazanen, Polysilanen und Polycarbosilanen und die Mischung fähig ist, bei erhöhter Temperatur in einer inerten Atmosphäre in einen keramischen Verkohlungsrückstand mit einer Ausbeute von mehr als 20 Gew.-%, bestimmt durch Pyrolyse des vorkeramischen Organosiliciumpolymers in einer inerten Atmosphäre, umgewandelt zu werden, und
(b) Bringen der Zusammensetzung unter Druck in eine gewünschte Form und Härten bei einer Temperatur zwischen 50 und 500°C, um einen handhabbaren Grünkörper zu erhalten.

2. Verfahren zur Herstellung eines gesinterten keramischen Körpers aus Zirkoniumcarbid mit einer Dichte von 4,8 g/cm³ oder größer und einer Festigkeit von größer als 49,0 MPa (5 kgf/mm²), wobei das Verfahren umfaßt:
(a) Herstellung eines handhabbaren Grünkörpers nach Anspruch 1 und
(b) Sintern des Körpers in einer inerten Atmosphäre bei einer Temperatur von größer als 2000°C, um den gesinterten Körper zu erhalten.

3. Verfahren nach Anspruch 1, worin mindestens ein Agens, ausgewählt der Gruppe bestehend aus Härtungsmitteln und Vernetzungsmitteln, zusätzlich in der einheitlichen Mischung in einer Menge vorhanden ist, die wirksam ist, um das vorkeramische Organosiliciumpolymer zu vernetzen.

4. Verfahren nach Anspruch 2, worin das vorkeramische Organosiliciumpolymer zu einem Verkohlungsrückstand führt, der mindestens etwa 10 Gew.-% freien Kohlenstoff enthält.

5. Verfahren nach Anspruch 2, worin der handhabbare Grünkörper bei einer Temperatur zwischen 2100 und 2250°C gesintert wird.

6. Verfahren nach Anspruch 1, worin das vorkeramische Organosiliciumpolymer ein Polysiloxan ist, das Einheiten enthält, die aus der Gruppe ausgewählt sind, die aus (MeSiO_{1,5}), (MePhSiO), (PhSiO_{1,5}) (Ph₂SiO), (ViMe₂SiO) und (PhViSiO) besteht.

7. Verfahren nach Anspruch 1, worin das vorkeramische Organosiliciumpolymer ein Polysilazan ist, das Einheiten enthält, die aus der Gruppe ausgewählt sind, die aus (Ph₂SiNH), (PhSi(NH)_{1,5}), (CH₂CH₂CH₂SiNH) und Kombinationen daraus besteht.

8. Verfahren nach Anspruch 1, worin das Zirkoniumcarbidpulver eine zahlengemittelte Teilchengröße von weniger als 5 µm aufweist.

9. Verfahren nach Anspruch 2, worin eine Verarbeitungshilfe, ausgewählt aus der Gruppe bestehend aus Schmiermitteln, Entflockern und Dispergiermitteln, zusätzlich in der Mischung vorhanden ist.

10. Ein gesinterter Zirkoniumcarbidkörper, der nach dem Verfahren aus Anpruch 2 erhältlich ist und eine Dichte von 4,8 g/cm³ oder größer und eine Festigkeit von größer als 49,0 MPa (5 kgf/mm²) aufweist und 2 bis 10 Gew.-% Siliciumcarbid, 0,1 bis 2 Gew.-% freien Kohlenstoff und 88-98 Gew.-% Zirkoniumcarbid enthält.

## Revendications

1. Un procédé de formation d'un corps cru maniable présentant une résistance mécanique à l'état cru d'au moins 2,0 MPa (20 kg/cm²), ledit procédé comprenant les opérations consistant:
(a) à préparer une composition qui comprend, en mélange homogène, 1 à 50 pour cent en poids d'un polymère organosilicié précéramique et 50 à 99 pour cent en poids d'une poudre de carbure de zirconium à particules de grosseur moyenne inférieure à 10 micromètres, ledit polymère organosilicié précéramique étant choisi dans le groupe formé par les polysiloxanes, les polysilazanes, les polysilanes et les polycarbosilanes et se prêtant à être transformé à température élevée sous atmosphère inerte en un produit de carbonisation céramique avec un rendement de plus de 20 pour cent en poids, tel que déterminé par pyrolyse dudit polymère organosilicié précéramique sous atmosphère inerte ; et
(b) à façonner sous pression la composition à une forme désirée et à la durcir à une température comprise entre 50 et 500 °C pour obtenir un corps cru maniable.

2. Un procédé de préparation d'un corps céramique fritté en carbure de zirconium présentant une masse volumique de 4,8 g/cm³ ou plus et une résistance mécanique supérieure à 49,0 MPa (5 kgf/mm²), ledit procédé comprenant les opérations consistant :
(a) à former un corps cru maniable selon la revendication 1, et
(b) à fritter ledit corps dans une atmosphère inerte à une température supérieure à 2000 °C pour obtenir le corps fritté.

3. Un procédé selon la revendication 1 dans lequel au moins un agent choisi dans le groupe formé par les agents durcisseurs et les agents de réticulation est présent en supplément dans le mélange homogène en une proportion efficace pour réticuler le polymère organosilicié précéramique.

4. Un procédé selon la revendication 2 dans lequel le polymère organosilicié précéramique fournit un produit de carbonisation contenant au moins environ 10 % en poids de carbone libre.

5. Un procédé selon la revendication 2 dans lequel le corps cru maniable est fritté à une température comprise entre 2100 et 2250 °C.

6. Un procédé selon la revendication 1 dans lequel le polymère organosilicié précéramique est un polysiloxane comprenant des motifs choisis dans le groupe formé par les motifs (MeSiO_{1,5}), (MePhSiO), (PhSiO_{1,5}), (Ph₂SiO), (ViMe₂SiO) et (PhViSiO).

7. Un procédé selon la revendication 1 dans lequel le polymère organosilicié précéramique est un polysilazane comprenant des motifs choisis dans le groupe formé par les motifs (Ph₂SiNH), [PhSi(NH)_{1,5}], (CH₂CH₂CH₂SiNH) et leurs combinaisons.

8. Un procédé selon l'une quelconque des revendications précédentes dans lequel la poudre de carbure de zirconium présente un grosseur de particules moyenne en nombre de moins de 5 micromètres.

9. Un procédé selon la revendication 2 dans lequel un adjuvant de traitement choisi parmi les lubrifiants, les agents défloculants et les agents dispersants est également présent dans le mélange.

10. Un corps en carbure de zirconium fritté qui peut être obtenu par le procédé de la revendication 2, ayant une masse volumique de 4,8 g/cm³ ou plus et une résistance mécanique supérieure à 49,0 MPa (5 kgf/mm²), et qui comprend 2 - 10 % en poids de carbure de silicium, 0,1 - 2 % en poids de carbone libre et 88 - 98 % en poids de carbure de zirconium.
